# EUROPEAN PATENT APPLICATION

(11) **EP 4 648 382 A1**
(43) Date of publication of application: **12.11.2025**
(21) Application number: 24749568.2
(22) Date of filing: 23.01.2024
(51) Int. Cl.: H04L 49/15

(54) **CLUSTER DEVICE, CLUSTER SYSTEM AND SERVICE PROCESSING METHOD**

(30) Priority: 02.02.2023 CN 202310102640
(71) Applicant: Huawei Technologies Co., Ltd., Shenzhen, Guangdong 518129 (CN)
(72) Inventor: ZHANG, Wei, Shenzhen, Guangdong 518129 (CN); CHANG, Shifan, Shenzhen, Guangdong 518129 (CN); ZHANG, Wenzhuo, Shenzhen, Guangdong 518129 (CN)
(74) Representative: Isarpatent
(86) International application number: PCT/CN2024/073554
(87) International publication number: WO 2024/160087

(57) **Abstract**

This application provides a cluster device, used in the field of cluster network technologies. The cluster device includes a first service board, a switch board, and a first slot. The first service board is configured to: receive a service signal, and transmit the service signal to the switch board. The switch board is connected to the first slot through a first switching signal connection apparatus. The first slot is used to accommodate one of a second service board and a first cluster transfer board. The first cluster transfer board includes a plurality of ports. A first port in the plurality of ports is connected to another cluster device. The switch board is configured to transmit the service signal to the second service board or the first cluster transfer board through the first switching signal connection apparatus. The second service board is configured to process the service signal. The first cluster transfer board is configured to transmit the service signal to the another cluster device through the first port. In the technical solutions disclosed in this application, the service board and the cluster transfer board share one slot, so that the service board or the cluster transfer board can be flexibly configured for the cluster device, thereby reducing costs of the cluster device.

## Description

This application claims priority to Chinese Patent Application No. CN202310102640.2, filed with the China National Intellectual Property Administration on February 2, 2023 and entitled "CLUSTER DEVICE, CLUSTER SYSTEM, AND SERVICE PROCESSING METHOD", which is incorporated herein by reference in its entirety.

### TECHNICAL FIELD

This application relates to the field of cluster network technologies, and in particular, to a cluster device, a cluster system, and a service processing method.

### BACKGROUND

With rapid development of network technologies, a cluster system has replaced a conventional network and become a leading data network system because of advantages such as high efficiency and high flexibility in management and control.

The cluster system generally includes a cluster device and a cluster central device. The cluster central device is configured to forward a service signal. The cluster device is configured to process and forward the service signal. The cluster device includes a service board and a switch board. The service board is configured to receive a service signal from another device. When another service board in another cluster device needs to process the service signal, the service board is configured to transmit the service signal to the switch board. The switch board includes a fabric chip and a transfer unit. The transfer unit includes a plurality of ports. The plurality of ports are connected to different service boards in the another cluster device. The fabric chip is configured to transmit the service signal to the another service board through a port corresponding to the another service board. Before outputting the service signal, the transfer unit may be configured to perform processing such as amplification, shaping, or optical-to-electrical conversion on the service signal. During actual application, the cluster device may alternatively be used as an independent device. Costs of the cluster device are high.

### SUMMARY

This application provides a cluster device, a cluster system, and a service processing method. A service board and a cluster transfer board share one slot, so that the service board or the cluster transfer board can be flexibly configured for the cluster device, thereby reducing costs of the cluster device.

A first aspect of this application provides a cluster device. The cluster device includes a first service board, a switch board, and a first slot. The first service board is configured to: receive a service signal, and transmit the service signal to the switch board. The switch board is connected to the first slot through a first switching signal connection apparatus. The first slot is used to accommodate one of a second service board and a first cluster transfer board. The first cluster transfer board includes a plurality of ports. A first port in the plurality of ports is connected to another cluster device. The switch board is configured to transmit the service signal to the second service board or the first cluster transfer board through the first switching signal connection apparatus. The second service board is configured to process the service signal. Alternatively, the first cluster transfer board is configured to transmit the service signal to the another cluster device through the first port.

In this application, the second service board and the first cluster transfer board share one slot. When the cluster device is not used as an independent device, the first slot is used to accommodate the first cluster transfer board. The cluster device forwards the service signal to the another cluster device through the first cluster transfer board. When the cluster device is used as an independent device, the first cluster transfer board may be removed, to reduce costs of the cluster device. In addition, a quantity of service boards is positively correlated with a service signal processing capability of the cluster device. To improve the service signal processing capability of the cluster device, when the cluster device is used as an independent device, the second service board may be accommodated in the first slot.

In an optional manner of the first aspect of this application, the first switching signal connection apparatus includes a first connection apparatus and a second connection apparatus. The switch board is connected to the second service board through the first connection apparatus. The switch board and the cluster transfer board are connected through the first connection apparatus and the second connection apparatus. In the cluster device, a larger ratio of the quantity of service boards to a quantity of cluster transfer boards indicates higher processing efficiency of a single cluster device. To improve the processing efficiency of the single cluster device, the quantity of service boards may be greater than the quantity of cluster transfer boards. In this case, to improve a service signal forwarding capability of the cluster device, a transmission capacity between the first cluster transfer board and the switch board needs to be greater than a transmission capacity between the second service board and the switch board. In addition, the costs of the cluster device can be reduced by sharing the first connection apparatus.

In an optional manner of the first aspect of this application, the first cluster transfer board includes one of a second cluster transfer board and a third cluster transfer board. The second cluster transfer board and the third cluster transfer board have different functions. In this application, the first slot may be used to accommodate cluster transfer boards having different functions, to meet networking requirements of the cluster device in different scenarios.

In an optional manner of the first aspect of this application, the second cluster transfer board is configured to transmit an optical signal of the service signal to the another cluster device through the first port. The third cluster transfer board is configured to transmit an electrical signal of the service signal to the another cluster device through the first port. When the first slot is used to accommodate the second cluster transfer board, the second cluster transfer board is configured to output the optical signal. When the first slot is used to accommodate the third cluster transfer board, the third cluster transfer board is configured to output the electrical signal. Therefore, this application can meet different requirements of performing optical signal networking or electrical signal networking by the cluster device.

In an optional manner of the first aspect of this application, the cluster device further includes a service board slot, a switch board slot, and a plurality of slots that are provided on a backplane. The service board slot is used to accommodate the first service board. The switch board slot is used to accommodate the switch board. The plurality of slots include the first slot. Each of the plurality of slots is used to accommodate one of the second service board and the first cluster transfer board. The plurality of slots are adjacent to each other on the backplane. In this application, the plurality of slots are shared slots. The shared slots may be used to accommodate both the service board and the cluster transfer board. When the plurality of slots are adjacent to each other on the backplane, operation and maintenance costs can be reduced.

In an optional manner of the first aspect of this application, the first cluster transfer board further includes a cross unit. An input port of the cross unit is connected to the switch board through the first switching signal connection apparatus. A first output port of the cross unit is connected to the first port. A second output port of the cross unit is connected to a second port in the plurality of ports. When the second port and the first port are connected to different cluster devices, a transmission object of the service signal may be changed by controlling the cross unit, to improve a forwarding capability of the cluster device. When the second port and the first port are connected to a same cluster device, reliability of transmitting the service signal can be improved through path backup.

In an optional manner of the first aspect of this application, the cluster device further includes another switch board. The another switch board is connected to the first slot through a second switching signal connection apparatus. The another switch board is configured to: receive another service signal, and transmit the another service signal to the second service board or the first cluster transfer board through the second switching signal connection apparatus. The second service board is configured to process the another service signal. The first cluster transfer board is configured to transmit the another service signal to the another cluster device through the first port. The cross unit includes a first input port and a second input port. The first input port of the cross unit is connected to the switch board through the first switching signal connection apparatus. The second input port of the cross unit is connected to the another switch board through the second switching signal connection apparatus. The cross unit is connected to different switch boards, so that the forwarding capability of the cluster device can be improved.

In an optional manner of the first aspect of this application, the first cluster transfer board further includes a cross unit. The first switching signal connection apparatus includes a third connection apparatus and a fourth connection apparatus. A first input port of the cross unit is connected to the third connection apparatus. A second input port of the cross unit is connected to the fourth connection apparatus. An output port of the cross unit is connected to the first port. In this application, reliability of transmitting the service signal can be improved through path backup.

In an optional manner of the first aspect of this application, the first cluster transfer board includes a clock and data recovery unit. The clock and data recovery unit is configured to perform clock and data recovery on the service signal. The reliability of transmitting the service signal can be improved through clock and data recovery.

A second aspect of this application provides a cluster central device. The cluster central device includes a switch board and a plurality of first cluster transfer boards. The plurality of first cluster transfer boards include a plurality of ports. Each of the plurality of first cluster transfer boards is connected to the plurality of switch boards. The plurality of first cluster transfer boards are configured to: receive a service signal from a cluster device through one of the plurality of ports, and transmit the service signal to one of the plurality of switch boards. The switch board is configured to transmit the service signal to another cluster device through another one of the plurality of ports. In this application, each switch board is connected to the plurality of first cluster transfer boards. Therefore, in this application, a forwarding capability of the cluster central device can be improved.

In an optional manner of the second aspect of this application, the first cluster transfer board includes one of a second cluster transfer board and a third cluster transfer board. The second cluster transfer board and the third cluster transfer board have different functions. The second cluster transfer board and the third cluster transfer board share one slot. In this application, the slot may be used to accommodate cluster transfer boards having different functions, to meet networking requirements of the cluster central device in different scenarios.

In an optional manner of the second aspect of this application, the plurality of second cluster transfer boards are configured to receive an optical signal of the service signal from the cluster device through one of the plurality of ports. The plurality of third cluster transfer boards are configured to receive an electrical signal of the service signal from the cluster device through one of the plurality of ports. When the slot is used to accommodate the second cluster transfer board, the second cluster transfer board is configured to receive the optical signal. When the slot is used to accommodate the third cluster transfer board, the third cluster transfer board is configured to receive the electrical signal. Therefore, this application can meet different requirements of performing optical networking or electrical networking by the cluster device.

A third aspect of this application provides a cluster system. The cluster system includes another cluster device and the cluster device according to any one of the first aspect or the optional manners of the first aspect. The cluster device is configured to: receive a service signal, and transmit the service signal to the another cluster device. The another cluster device is configured to process the service signal.

In an optional manner of the third aspect of this application, the cluster system further includes the cluster central device according to any one of the second aspect or the optional manners of the second aspect. The cluster device is configured to transmit the service signal to the another cluster device through the cluster central device.

A fourth aspect of this application provides a service processing method. The service processing method is applied to a cluster device. The service processing method includes the following steps. The cluster device receives a service signal through a first service board. The cluster device transmits the service signal to a switch board. The switch board is connected to a first slot through a first switching signal connection apparatus. The first slot is used to accommodate one of a second service board and a first cluster transfer board. The first cluster transfer board includes a plurality of ports. A first port in the plurality of ports is connected to another cluster device. The cluster device transmits the service signal to the second service board or the first cluster transfer board through the first switching signal connection apparatus. The cluster device processes the service signal through the second service board. Alternatively, the cluster device transmits the service signal to the another cluster device through the first port of the first cluster transfer board.

In an optional manner of the fourth aspect of this application, the first switching signal connection apparatus includes a first connection apparatus and a second connection apparatus. The cluster device transmits the service signal to the second service board through the first connection apparatus. The cluster device transmits the service signal to the first cluster transfer board through the first connection apparatus and the second connection apparatus.

In an optional manner of the fourth aspect of this application, the first cluster transfer board includes one of a second cluster transfer board and a third cluster transfer board. The second cluster transfer board and the third cluster transfer board have different functions.

In an optional manner of the fourth aspect of this application, the cluster device transmits an optical signal of the service signal to the another cluster device through the first port of the second cluster transfer board. Alternatively, the cluster device transmits an optical signal of the service signal to the another cluster device through the first port of the third cluster transfer board.

### BRIEF DESCRIPTION OF DRAWINGS

FIG. 1 is a first schematic of a structure of a cluster device according to an embodiment of this application;
FIG. 2 is a second schematic of a structure of a cluster device according to an embodiment of this application;
FIG. 3 is a third schematic of a structure of a cluster device according to an embodiment of this application;
FIG. 4 is a fourth schematic of a structure of a cluster device according to an embodiment of this application;
FIG. 5 is a fifth schematic of a structure of a cluster device according to an embodiment of this application;
FIG. 6 is a sixth schematic of a structure of a cluster device according to an embodiment of this application;
FIG. 7 is a seventh schematic of a structure of a cluster device according to an embodiment of this application;
FIG. 8 is an eighth schematic of a structure of a cluster device according to an embodiment of this application;
FIG. 9 is a ninth schematic of a structure of a cluster device according to an embodiment of this application;
FIG. 10 is a tenth schematic of a structure of a cluster device according to an embodiment of this application;
FIG. 11 is a schematic of a structure of a cluster central device according to an embodiment of this application;
FIG. 12 is a first schematic of a structure of a cluster system according to an embodiment of this application;
FIG. 13 is a second schematic of a structure of a cluster system according to an embodiment of this application; and
FIG. 14 is a schematic flowchart of a service processing method according to an embodiment of this application.

### DESCRIPTION OF EMBODIMENTS

This application provides a cluster device, a cluster system, and a service processing method. A service board and a cluster transfer board share one slot, so that the service board or the cluster transfer board can be flexibly configured for the cluster device, thereby reducing costs of the cluster device. It should be understood that "first", "second", and the like used in this application are merely used for distinguishing and description, but should not be understood as an indication or implication of relative importance or an indication or implication of a sequence. In addition, for brevity and clarity, reference numbers and/or letters are repeated in a plurality of accompanying drawings of this application, which does not indicate that there is a strictly limiting relationship between various embodiments and/or configurations.

The cluster device in this application is used in the field of cluster network technologies. In the field of cluster network technologies, the cluster device is configured to process and forward a service signal. A service board in the cluster device is configured to process the service signal. A switch board in the cluster device is configured to forward the service signal. The switch board includes a fabric chip and a transfer unit. The fabric chip is configured to implement electrical cross-connection. The transfer unit is configured to perform pre-forwarding processing such as amplification, shaping, or optical-to-electrical conversion on an electrical signal output by the fabric chip. However, the cluster device may alternatively be used as an independent device. In this case, due to existence of the transfer unit, costs of the cluster device are high.

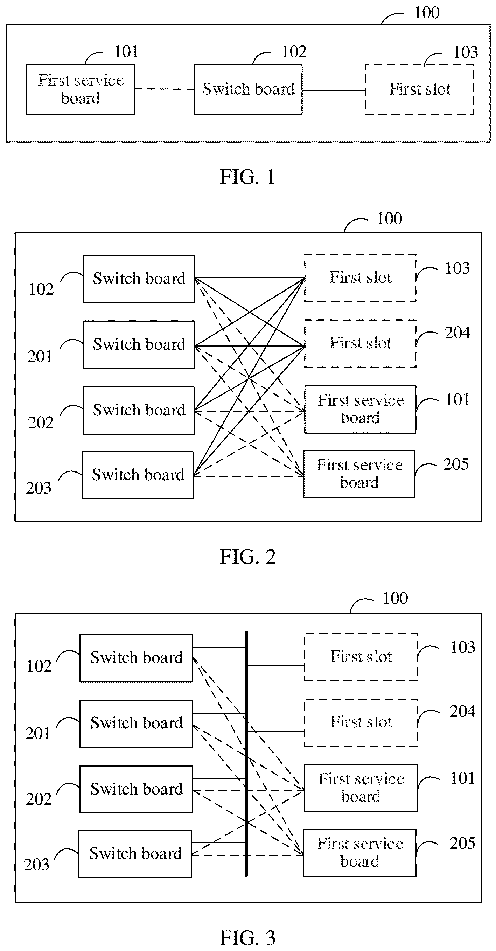

In view of this, this application provides a cluster device. FIG. 1 is a first schematic of a structure of a cluster device according to an embodiment of this application. As shown in FIG. 1, the cluster device 100 includes a first service board 101, a switch board 102, and a first slot 103. Descriptions are separately provided below.

The first service board 101 may include a tributary board, a line board, or a control board. The tributary board is configured to receive and send various client services, for example, a synchronous digital hierarchy (synchronous digital hierarchy, SDH) service, a packet service, an Ethernet service, and/or a fronthaul service. Further, the tributary board may include a client-side optical transceiver module and a signal processor. The client-side optical transceiver module may also be referred to as an optical transceiver, and is configured to receive and/or send a service signal. The signal processor is configured to implement mapping and demapping between the service signal and a data frame. The line board mainly processes a line-side data frame. Specifically, the line board may include a line-side optical module and a signal processor. The line-side optical module may be referred to as an optical transceiver, and is configured to receive and/or send a service signal. The signal processor is configured to implement multiplexing and demultiplexing, or mapping and demapping on the line-side service signal. The control board is configured to implement system control. Specifically, information may be collected from different boards, or a control instruction may be sent to a corresponding board. It should be noted that, unless otherwise specified, there may be one or more specific components (for example, signal processors). This is not limited in this application. It should be further noted that a type of a board included in the first service board 101, and a quantity of boards and function designs of the boards are not limited in this application. It should be noted that, during specific implementation, the tributary board and the line board may alternatively be designed as one board.

The first service board 101 is configured to receive the service signal through the tributary board. When the service signal is an optical signal, the first service board 101 is further configured to convert the optical signal of the service signal into an electrical signal. It should be understood that the first service board 101 may alternatively be configured to directly receive an electrical signal of the service signal. The first service board 101 is further configured to determine whether the service signal is to be processed by another service board. When the first service board 101 determines that the service signal is not to be processed by the another service board, the first service board 101 processes the electrical signal of the service signal. The service board implements, for example, but not limited to, service mapping and demapping, clock extraction and transparent transmission, and service overhead extraction and insertion according to a specific service protocol. When the first service board 101 determines that the service signal is to be processed by the another service board, the first service board 101 is configured to transmit the electrical signal of the service signal to the switch board 102.

The switch board 102 is also referred to as a fabric chip or a cross-connect board. The switch board 102 is connected to the first slot 103 through a first switching signal connection apparatus. The first switching signal connection apparatus may be a connector, a signal cable, or the like. The first slot 103 may be a gold finger slot, another male-female connector slot, or the like. The first slot 103 is used to accommodate one of a second service board and a first cluster transfer board. The first cluster transfer board includes a plurality of ports. A first port in the plurality of ports is connected to another cluster device. The first port may be an optical fiber port or a cable port. For descriptions of the second service board, refer to the foregoing descriptions of the first service board 101. The switch board 102 is configured to implement electrical cross-connection of the service signal. Specifically, the switch board 102 is configured to: receive the electrical signal of the service signal from the first service board 101, and transmit the service signal to the second service board or the first cluster transfer board through the first switching signal connection apparatus.

When the second service board is accommodated in the first slot, the second service board is configured to process the service signal. When the first cluster transfer board is accommodated in the first slot, the first cluster transfer board is configured to transmit the service signal to the another cluster device through the first port. For descriptions of the another cluster device, refer to the descriptions of the cluster device 100. For example, the another cluster device receives the service signal through a cluster transfer board, and transmits the service signal to a service board through a switch board. The another cluster device processes the service signal through the service board.

In this embodiment of this application, the first cluster transfer board is further configured to implement some or all of functions in pre-forwarding processing. For ease of description, an example in which the pre-forwarding processing includes amplification, shaping, and optical-to-electrical conversion is used for description subsequently. When the first cluster transfer board is further configured to implement some of the functions in the pre-forwarding processing, the switch board 102 may be configured to perform power amplification, shaping, and optical-to-electrical conversion on the service signal. The first cluster transfer board is configured to: receive the optical signal of the service signal from the switch board 102, and perform power amplification on the optical signal of the service signal. When the first cluster transfer board is configured to implement all of the functions in the pre-forwarding processing, the first cluster transfer board is configured to: receive the electrical signal of the service signal from the switch board 102, and perform the pre-forwarding processing on the electrical signal of the service signal.

In this embodiment of this application, the second service board and the first cluster transfer board share one slot. When the cluster device is not used as an independent device, the first slot is used to accommodate the first cluster transfer board. The cluster device forwards the service signal to the another cluster device through the first cluster transfer board. The first cluster transfer board is configured to implement some or all of the functions in the pre-forwarding processing. When the cluster device is used as an independent device, the first cluster transfer board may be removed, to reduce costs of the cluster device. In addition, a quantity of service boards is positively correlated with a service signal processing capability of the cluster device. To improve the service signal processing capability of the cluster device, the second service board may be accommodated in the first slot.

It should be understood that, in the cluster device 100, there may be one or more first service boards, one or more switch boards, and one or more first slots. FIG. 2 is a second schematic of a structure of a cluster device according to an embodiment of this application. As shown in FIG. 2, the cluster device 100 includes two first service boards (a first service board 101 and a first service board 205), four switch boards (a switch board 102 and switch boards 201 to 203), and two first slots (a first slot 103 and a first slot 204). The first service board and the switch board are connected through a third switching signal connection apparatus (which is indicated by a dashed line in FIG. 2). The first slot and the switch board are connected through a first switching signal connection apparatus (which is indicated by a solid line in FIG. 2). Each of the two first service boards is connected to the four switch boards. Each of the four switch boards is connected to the two first slots.

According to the descriptions of FIG. 2, it can be learned that, the first slot and the switch board are connected through the first switching signal connection apparatus. The first switching signal connection apparatus may include a first connection apparatus and a second connection apparatus. When the first slot is used to accommodate a second service board, the switch board is connected to the second service board through the first connection apparatus. When the first slot is used to accommodate a first cluster transfer board, the switch board is connected to the first cluster transfer board through the second connection apparatus.

During actual application, to reduce costs of the cluster device 100, the second service board and the first cluster transfer board may share a connection apparatus. For example, the first switching signal connection apparatus includes a first connection apparatus and a second connection apparatus. When the first slot is used to accommodate the second service board, the switch board is connected to the second service board through the first connection apparatus. When the first slot is used to accommodate the first cluster transfer board, the switch board and the first cluster transfer board are connected through the first connection apparatus and the second connection apparatus.

According to the descriptions of FIG. 2, it can be learned that, the first slot and the switch board are connected through the first switching signal connection apparatus. The first service board and the switch board are connected through the third switching signal connection apparatus. In the cluster device 100, a larger ratio of a quantity of service boards to a quantity of cluster transfer boards indicates higher processing efficiency of a single cluster device. To improve the processing efficiency of the single cluster device, the quantity of service boards may be greater than the quantity of cluster transfer boards. In this case, to improve a service signal forwarding capability of the cluster device, a transmission capacity between the first cluster transfer board and the switch board may be greater than a transmission capacity between the first service board and the switch board, that is, a transmission capacity of the first switching signal connection apparatus is greater than a transmission capacity of the third switching signal connection apparatus.

In the example shown in FIG. 2, a topology structure between the first service board and the switch board is a mesh topology structure. During actual application, the topology structure between the first service board and the switch board may alternatively be a bus topology structure. FIG. 3 is a third schematic of a structure of a cluster device according to an embodiment of this application. As shown in FIG. 3, on the basis of FIG. 2, a topology structure between the first service board and the switch board is a bus topology structure.

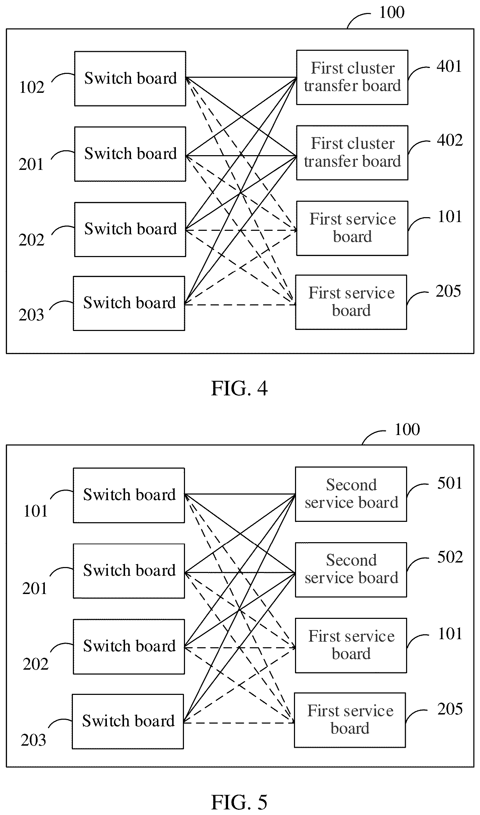

According to the descriptions of FIG. 1, it can be learned that, the second service board and the first cluster transfer board share one slot. Therefore, in FIG. 2, the two first slots may be used to accommodate one first service board and one first cluster transfer board. Alternatively, the two first slots are used to accommodate two second service boards or two first cluster transfer boards. FIG. 4 is a fourth schematic of a structure of a cluster device according to an embodiment of this application. As shown in FIG. 4, on the basis of FIG. 2, the first slot 103 is used to accommodate a first cluster transfer board 401. The first slot 204 is used to accommodate a first cluster transfer board 402. FIG. 5 is a fifth schematic of a structure of a cluster device according to an embodiment of this application. As shown in FIG. 5, on the basis of FIG. 2, the first slot 103 in the cluster device 100 is used to accommodate a second service board 501. The first slot 204 is used to accommodate a second service board 502.

In this application, the first slot may be used to accommodate the first cluster transfer board. To meet networking requirements of the cluster device in different scenarios, the first cluster transfer board includes one of a second cluster transfer board and a third cluster transfer board. The second cluster transfer board and the third cluster transfer board have different functions. Descriptions are provided below by using an example.

In a first example, when the first slot is used to accommodate the second cluster transfer board, the second cluster transfer board is configured to: receive an electrical signal of the service signal from the switch board, and perform power amplification and shaping on the electrical signal. The second cluster transfer board is further configured to perform optical-to-electrical conversion processing on the electrical signal, to obtain an optical signal of the service signal. The second cluster transfer board is further configured to: perform power amplification on the optical signal, and transmit the amplified optical signal to the another cluster device. When the first slot is used to accommodate the third cluster transfer board, the third cluster transfer board is configured to: receive an electrical signal of the service signal from the switch board, and perform power amplification and shaping on the electrical signal. The third cluster transfer board is further configured to: perform optical-to-electrical conversion processing on the electrical signal, to obtain an optical signal of the service signal, and transmit the optical signal of the service signal to the another cluster device. During actual application, when a distance between the cluster device 100 and the another cluster device is short, the third cluster transfer board may not need to perform power amplification on the optical signal of the service signal.

In a second example, when the first slot is used to accommodate the second cluster transfer board, the second cluster transfer board is configured to: receive an electrical signal of the service signal from the switch board, and perform power amplification and shaping on the electrical signal. The second cluster transfer board is further configured to: perform optical-to-electrical conversion processing on the electrical signal, to obtain an optical signal of the service signal, and transmit the optical signal of the service signal to the another cluster device. When the first slot is used to accommodate the third cluster transfer board, the third cluster transfer board is configured to: receive an electrical signal of the service signal from the switch board, and perform power amplification and shaping on the electrical signal. The third cluster transfer board is configured to transmit the electrical signal of the service signal to the another cluster device. During actual application, when networking is performed between the cluster device 100 and the another cluster device by using the electrical signal, the third cluster transfer board may not need to perform optical-to-electrical conversion processing on the service signal.

In a third example, the second cluster transfer board and the third cluster transfer board each include a cross unit. A function of the cross unit in the third cluster transfer board is different from a function of the cross unit in the second cluster transfer board. Alternatively, the second cluster transfer board includes a cross unit. The third cluster transfer board does not include a cross unit. The following describes functions of the cross unit separately.

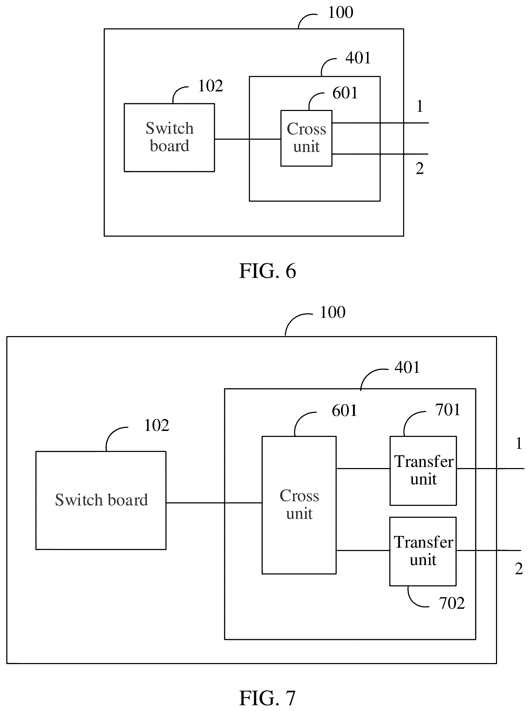

FIG. 6 is a sixth schematic of a structure of a cluster device according to an embodiment of this application. As shown in FIG. 6, the cluster device 100 includes a switch board 102 and a first cluster transfer board 401. The first cluster transfer board 401 includes a cross unit 601. The cross unit 601 may be a cross point (Cross Point, CP) chip having a cross function. An input port of the cross unit 601 is connected to the switch board 102 through a first switching signal connection apparatus. A first output port of the cross unit 601 is connected to a first port (also referred to as a port 1). A second output port of the cross unit 601 is connected to a second port (port 2) in a plurality of ports. When the second port and the first port are connected to different cluster devices, the cluster device 100 may change a transmission object of a service signal by controlling the cross unit 601, to improve a forwarding capability of the cluster device 100. When the second port and the first port are connected to a same cluster device, there are two transmission paths between the cluster device 100 and another cluster device. Path backup is formed between the two paths. When one transmission path is faulty, the cluster device 100 may transmit the service signal through the other transmission path, to improve reliability of transmitting the service signal.

FIG. 7 is a seventh schematic of a structure of a cluster device according to an embodiment of this application. As shown in FIG. 7, on the basis of FIG. 6, the cluster device 100 further includes a transfer unit 701 and a transfer unit 702. The cross unit 601 is configured to change a transmission object of a service signal or implement a path backup function. Specifically, the cross unit 601 is configured to transmit the service signal to the transfer unit 701 or the transfer unit 702. The transfer unit 701 and the transfer unit 702 are configured to implement some or all of functions in pre-forwarding processing. For example, the transfer unit 701 and the transfer unit 702 are configured to convert an electrical signal of the service signal into an optical signal.

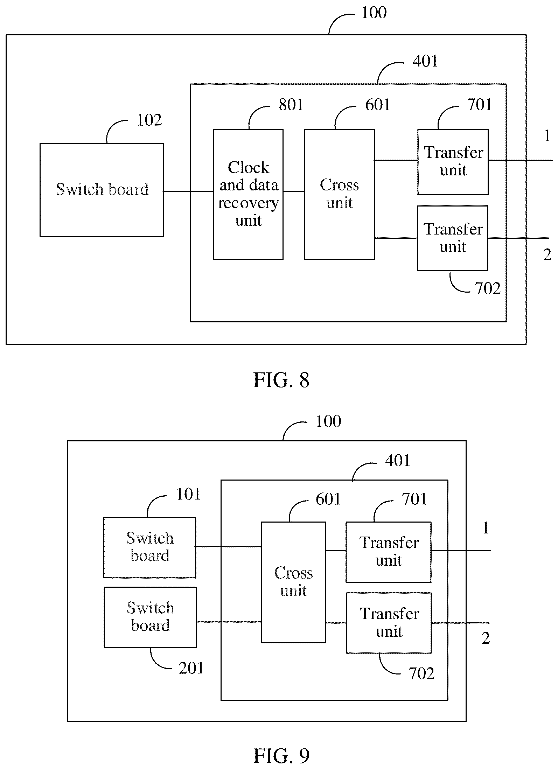

FIG. 8 is an eighth schematic of a structure of a cluster device according to an embodiment of this application. As shown in FIG. 8, on the basis of FIG. 7, the cluster device 100 further includes a clock and data recovery (clock and data recovery, CDR) unit 801. The CDR unit 801 is configured to: receive an electrical signal of a service signal from the switch board 102, and perform clock and data recovery on the electrical signal of the service signal. The CDR unit 801 is further configured to transmit the electrical signal on which clock and data recovery is performed to the transfer unit 701. For descriptions of the transfer unit 701, the transfer unit 702, and the cross unit 601, refer to the foregoing descriptions in FIG. 6 or FIG. 7.

FIG. 9 is a ninth schematic of a structure of a cluster device according to an embodiment of this application. As shown in FIG. 9, on the basis of FIG. 7, the cluster device 100 further includes a switch board 201. The switch board 201 is connected to the first cluster transfer board 401 through a second switching signal connection apparatus. The switch board 201 is configured to: receive another service signal, and transmit the another service signal to a second service board or the first cluster transfer board through the second switching signal connection apparatus. For descriptions of the switch board 201, refer to the foregoing descriptions in FIG. 2. In this case, the switch board 201 may be configured to receive the another service signal from the first service board 101 or the first service board 205. When the second service board is accommodated in the first slot, the second service board is configured to process the another service signal. When the first cluster transfer board is accommodated in the first slot, the first cluster transfer board is configured to transmit the another service signal to another cluster device through the first port. The cross unit 601 includes a first input port and a second input port. The first input port of the cross unit 601 is connected to the switch board 102 through a first switching signal connection apparatus. The second input port of the cross unit 601 is connected to the switch board 201 through the second switching signal connection apparatus. In this embodiment of this application, the cross unit 601 is connected to different switch boards, so that a forwarding capability of the cluster device 100 can be improved.

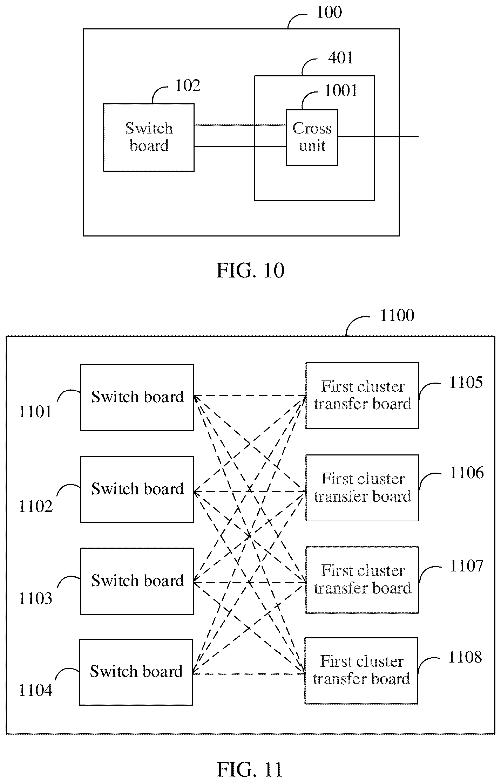

FIG. 10 is a tenth schematic of a structure of a cluster device according to an embodiment of this application. As shown in FIG. 10, the cluster device 100 includes a switch board 102 and a first cluster transfer board 401. The first cluster transfer board 401 is connected to the switch board 102 through a first switching signal connection apparatus. Specifically, the first switching signal connection apparatus includes a third connection apparatus and a fourth connection apparatus. The first cluster transfer board 401 includes a cross unit 1001. A first input port of the cross unit 1001 is connected to the switch board 102 through the third connection apparatus. A second input port of the cross unit 1001 is connected to the switch board 102 through the fourth connection apparatus. An output port of the cross unit 1001 is connected to a first port. In this embodiment of this application, there are two transmission paths between the switch board 102 and the first cluster transfer board 401. Path backup is formed between the two transmission paths. When one transmission path is faulty, the switch board 102 may transmit a service signal through the other transmission path, to improve reliability of transmitting the service signal.

It should be understood that the "output port" and the "input port" in this application are merely used for distinguishing and description, and do not limit a specific function of the port. For example, during actual application, the cluster device 100 may alternatively receive a service signal from another cluster device through the first cluster transfer board 401. In this case, the output port of the cross unit 1001 is configured to receive the service signal from the another cluster device. The first input port or the second input port of the cross unit 1001 is configured to transmit the service signal to the switch board 102.

During actual application, the cluster device 100 may further include a backplane. A service board slot, a switch board slot, and a plurality of first slots are provided on the backplane. The service board slot is used to accommodate a first service board. For example, in FIG. 2, the cluster device 100 may include two service board slots. The two service board slots are in one-to-one correspondence with the two first service boards. The switch board slot is used to accommodate the switch board. For example, in FIG. 2, the cluster device 100 may include four switch board slots. The four switch board slots are in one-to-one correspondence with the four switch boards. Each of the plurality of first slots is used to accommodate one of a second service board and the first cluster transfer board. The plurality of first slots are adjacent to each other on the backplane. In this embodiment of this application, the plurality of first slots are shared slots. The shared slots may be used to accommodate both the service board and the cluster transfer board. When the plurality of first slots are adjacent to each other on the backplane, operation and maintenance costs can be reduced.

It should be understood that whether the service board slot is a shared slot is not limited in this embodiment of this application. When the service board slot is a shared slot, the service board slot is used to accommodate one of the first cluster transfer board and the first service board. When all the service board slots are used to accommodate the first cluster transfer board, the cluster device is configured to forward the service signal. In this case, the cluster device may also be referred to as a cluster central device.

The foregoing describes the cluster device provided in embodiments of this application, and the following describes the cluster central device provided in embodiments of this application. The cluster central device is configured to forward a service signal. FIG. 11 is a schematic of a structure of a cluster central device according to an embodiment of this application. As shown in FIG. 11, the cluster central device 1100 includes a plurality of switch boards and a plurality of first cluster transfer boards. In FIG. 11, an example in which a quantity of switch boards and a quantity of first cluster transfer boards are 4 is used for description. The four switch boards are switch boards 1101 to 1104. The four first cluster transfer boards are first cluster transfer boards 1105 to 1108. Each of the plurality of first cluster transfer boards is connected to the plurality of switch boards. The plurality of first cluster transfer boards include a plurality of ports. The plurality of first cluster transfer boards are configured to: receive a service signal from a cluster device through one of the plurality of ports, and transmit the service signal to one of the plurality of switch boards. For descriptions of the first cluster transfer board, refer to the foregoing descriptions of the first cluster transfer board in the cluster device 100. The switch board that receives the service signal is configured to transmit the service signal to another cluster device through another one of the plurality of ports. In this embodiment of this application, each switch board is connected to the plurality of first cluster transfer boards. Therefore, in this application, a forwarding capability of the cluster central device can be improved.

It should be understood that the structure of the cluster central device 1100 is similar to the structure of the cluster device 100. Therefore, for descriptions of the cluster central device 1100, refer to the foregoing descriptions of the cluster device 100. For example, the cluster central device 1100 includes a plurality of first slots. The plurality of first slots are in one-to-one correspondence with the plurality of first cluster transfer boards. Each of the plurality of first slots is used to accommodate one of a second service board and the first cluster transfer board. When some of the plurality of first slots are used to accommodate the second service board, the cluster central device 1100 may process the service signal through the second service board. For another example, the first cluster transfer board includes one of a second cluster transfer board and a third cluster transfer board. The second cluster transfer board and the third cluster transfer board have different functions. The second cluster transfer board and the third cluster transfer board share one slot. For another example, the plurality of second cluster transfer boards are configured to receive an optical signal of the service signal from the cluster device through one of the plurality of ports. The plurality of third cluster transfer boards are configured to receive an electrical signal of the service signal from the cluster device through one of the plurality of ports.

In another embodiment, the cluster central device 1100 or the cluster device 100 may further include a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory may be configured to store a mapping relationship between an output port of the switch board and the first cluster transfer board. The switch board is configured to determine an output port of the service signal based on the mapping relationship.

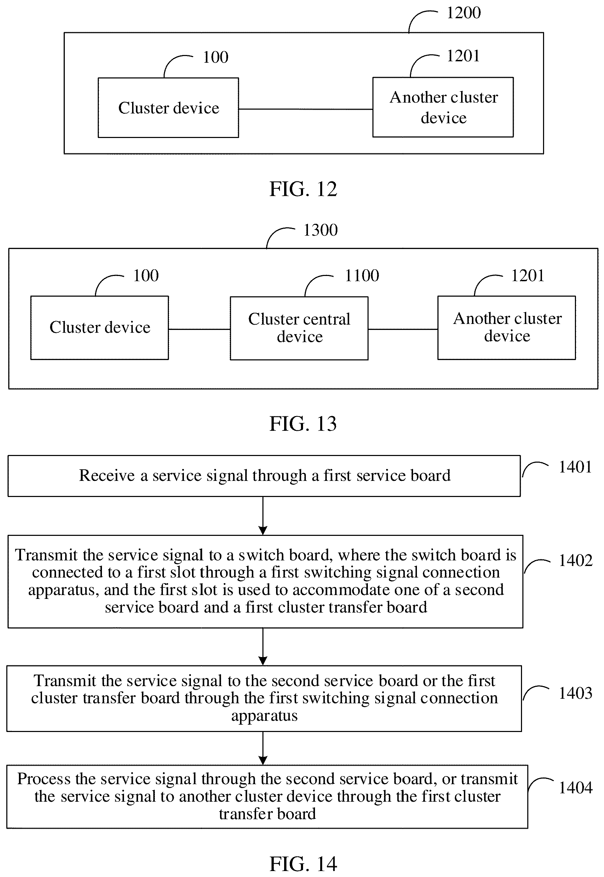

FIG. 12 is a first schematic of a structure of a cluster system according to an embodiment of this application. As shown in FIG. 12, the cluster system 1200 includes another cluster device 1201 and a cluster device 100. The cluster device 100 is configured to: receive a service signal, and transmit the service signal to the another cluster device 1201. For descriptions of the cluster device 100, refer to the foregoing descriptions in any one of FIG. 1 to FIG. 10. The another cluster device 1201 is configured to process the service signal. For descriptions of the another cluster device 1201, refer to the foregoing descriptions of the cluster device 100.

It should be understood that, during actual application, the another cluster device 1201 may alternatively transmit the service signal to the cluster device 100. The cluster device 100 is configured to process the service signal. For example, the cluster device 100 receives the service signal from the another cluster device 1201 through the first cluster transfer board 401, and transmits the service signal to the switch board 102. The switch board 102 is configured to transmit the service signal to the first service board 101. The first service board 101 is configured to process the service signal sent by the another cluster device 1201.

During actual application, a plurality of cluster devices may form a cluster system through a cluster central device. FIG. 13 is a second schematic of a structure of a cluster system according to an embodiment of this application. As shown in FIG. 13, on the basis of FIG. 12, the cluster system 1300 further includes a cluster central device 1100. The cluster device 100 is configured to transmit a service signal to the another cluster device 1201 through the cluster central device 1100. For descriptions of the cluster central device 1100, refer to the foregoing descriptions in FIG. 11.

It should be understood that FIG. 12 and FIG. 13 are merely a plurality of examples of the cluster system according to embodiments of this application. A person skilled in the art may adaptively modify the structure of the cluster system based on a requirement. For example, in FIG. 13, the cluster system 1300 further includes six other cluster devices. The six cluster devices are separately connected to the cluster device 100 and the another cluster device 1201 through the cluster central device 1100.

FIG. 14 is a schematic flowchart of a service processing method according to an embodiment of this application. As shown in FIG. 14, the service processing method includes the following steps.

In step 1401, a cluster device receives a service signal through a first service board.

The service signal may be an SDH service, a packet service, an Ethernet service, a fronthaul service, and/or the like. The first service board may include a tributary board, a line board, or a control board. Further, the tributary board may be divided into a client-side optical transceiver module and a signal processor. The cluster device may receive an optical signal of the service signal through an optical transceiver module, and convert the optical signal of the service signal into an electrical signal. The cluster device may further perform mapping and demapping processing on the service signal through the signal processor.

In step 1402, the cluster device transmits the service signal to a switch board. The switch board is connected to a first slot through a first switching signal connection apparatus. The first slot is used to accommodate one of a second service board and a first cluster transfer board. The first cluster transfer board includes a plurality of ports. A first port in the plurality of ports is connected to another cluster device.

In step 1403, the cluster device transmits the service signal to the second service board or the first cluster transfer board through the first switching signal connection apparatus.

When the second service board is accommodated in the first slot, the cluster device transmits the service signal to the second service board through the first switching signal connection apparatus. When the first cluster transfer board is accommodated in the first slot, the cluster device transmits the service signal to the first cluster transfer board through the first switching signal connection apparatus. The first switching signal connection apparatus may be a connector, a cable television cable, or the like.

In step 1404, the cluster device processes the service signal through the second service board, or the cluster device transmits the service signal to the another cluster device through the first port of the first cluster transfer board.

When the second service board is accommodated in the first slot, the cluster device processes the service signal through the second service board. When the first cluster transfer board is accommodated in the first slot, the cluster device transmits the service signal to the another cluster device through the first cluster transfer board. For descriptions of the another cluster device, refer to the descriptions of the cluster device. For example, the another cluster device receives the service signal through a cluster transfer board, and transmits the service signal to a service board through a switch board. The another cluster device processes the service signal through the service board.

It should be understood that descriptions of the service processing method are similar to the foregoing descriptions of the cluster device 100. Therefore, for descriptions of the service processing method, refer to the foregoing descriptions in any one of FIG. 1 to FIG. 10. For example, the first switching signal connection apparatus includes a first connection apparatus and a second connection apparatus. The cluster device transmits the service signal to the second service board through the first connection apparatus. The cluster device transmits the service signal to the first cluster transfer board through the first connection apparatus and the second connection apparatus. For another example, the first cluster transfer board includes one of a second cluster transfer board and a third cluster transfer board. The second cluster transfer board and the third cluster transfer board have different functions.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A cluster device, comprising a first service board, a switch board, and a first slot, wherein the first service board is configured to: receive a service signal, and transmit the service signal to the switch board;
the switch board is connected to the first slot through a first switching signal connection apparatus, the first slot is used to accommodate one of a second service board and a first cluster transfer board, the first cluster transfer board comprises a plurality of ports, and a first port in the plurality of ports is connected to another cluster device; and
the switch board is configured to transmit the service signal to the second service board or the first cluster transfer board through the first switching signal connection apparatus, wherein the second service board is configured to process the service signal; or the first cluster transfer board is configured to transmit the service signal to the another cluster device through the first port.

2. The cluster device according to claim 1, wherein the first switching signal connection apparatus comprises a first connection apparatus and a second connection apparatus, the switch board is connected to the second service board through the first connection apparatus, and the switch board and the first cluster transfer board are connected through the first connection apparatus and the second connection apparatus.

3. The cluster device according to claim 1 or 2, wherein the first cluster transfer board comprises one of a second cluster transfer board and a third cluster transfer board, and the second cluster transfer board and the third cluster transfer board have different functions.

4. The cluster device according to claim 3, wherein
that the first cluster transfer board is configured to transmit the service signal to the another cluster device through the first port comprises: the second cluster transfer board is configured to transmit an optical signal of the service signal to the another cluster device through the first port; or
that the first cluster transfer board is configured to transmit the service signal to the another cluster device through the first port comprises: the third cluster transfer board is configured to transmit an electrical signal of the service signal to the another cluster device through the first port.

5. The cluster device according to any one of claims 1 to 4, wherein the cluster device further comprises a service board slot, a switch board slot, and a plurality of slots that are provided on a backplane;
the service board slot is used to accommodate the first service board;
the switch board slot is used to accommodate the switch board; and
the plurality of slots comprise the first slot, each of the plurality of slots is used to accommodate one of the second service board and the first cluster transfer board, and the plurality of slots are adjacent to each other on the backplane.

6. The cluster device according to any one of claims 1 to 5, wherein the first cluster transfer board further comprises a cross unit, an input port of the cross unit is connected to the switch board through the first switching signal connection apparatus, a first output port of the cross unit is connected to the first port, and a second output port of the cross unit is connected to a second port in the plurality of ports.

7. The cluster device according to claim 6, wherein the cluster device further comprises another switch board, the another switch board is connected to the first slot through a second switching signal connection apparatus, and the another switch board is configured to: receive another service signal, and transmit the another service signal to the second service board or the first cluster transfer board through the second switching signal connection apparatus;
the second service board is configured to process the another service signal;
the first cluster transfer board is configured to transmit the another service signal to the another cluster device through the first port;
the cross unit comprises a first input port and a second input port; and
that an input port of the cross unit is connected to the switch board through the first switching signal connection apparatus comprises: the first input port of the cross unit is connected to the switch board through the first switching signal connection apparatus; and
the second input port of the cross unit is connected to the another switch board through the second switching signal connection apparatus.

8. The cluster device according to claim 1, wherein the first cluster transfer board further comprises a cross unit, the first switching signal connection apparatus comprises a third connection apparatus and a fourth connection apparatus, a first input port of the cross unit is connected to the third connection apparatus, a second input port of the cross unit is connected to the fourth connection apparatus, and an output port of the cross unit is connected to the first port.

9. The cluster device according to any one of claims 1 to 8, wherein the first cluster transfer board comprises a clock and data recovery unit, and the clock and data recovery unit is configured to perform clock and data recovery on the service signal.

10. A cluster central device, comprising a plurality of switch boards and a plurality of first cluster transfer boards, wherein
the plurality of first cluster transfer boards comprise a plurality of ports, each of the plurality of first cluster transfer boards is connected to the plurality of switch boards, and the plurality of first cluster transfer boards are configured to: receive a service signal from a cluster device through one of the plurality of ports, and transmit the service signal to one of the plurality of switch boards; and
the switch board is configured to transmit the service signal to another cluster device through another one of the plurality of ports.

11. The cluster central device according to claim 10, wherein the first cluster transfer board comprises one of a second cluster transfer board and a third cluster transfer board, and the second cluster transfer board and the third cluster transfer board have different functions.

12. The cluster central device according to claim 11, wherein
that the plurality of first cluster transfer boards are configured to receive a service signal from a cluster device through one of the plurality of ports comprises: the plurality of second cluster transfer boards are configured to receive an optical signal of the service signal from the cluster device through one of the plurality of ports; or
that the plurality of first cluster transfer boards are configured to receive a service signal from a cluster device through one of the plurality of ports comprises: the plurality of third cluster transfer boards are configured to receive an electrical signal of the service signal from the cluster device through one of the plurality of ports.

13. A cluster system, comprising another cluster device and the cluster device according to any one of claims 1 to 9, wherein
the cluster device is configured to: receive a service signal, and transmit the service signal to the another cluster device; and
the another cluster device is configured to process the service signal.

14. The cluster system according to claim 13, wherein the cluster system further comprises the cluster central device according to any one of claims 10 to 12; and
that the cluster device is configured to transmit the service signal to the another cluster device comprises: the cluster device is configured to transmit the service signal to the another cluster device through the cluster central device.

15. A service processing method, comprising:
receiving a service signal through a first service board;
transmitting the service signal to a switch board, wherein the switch board is connected to a first slot through a first switching signal connection apparatus, the first slot is used to accommodate one of a second service board and a first cluster transfer board, the first cluster transfer board comprises a plurality of ports, and a first port in the plurality of ports is connected to another cluster device;
transmitting the service signal to the second service board or the first cluster transfer board through the first switching signal connection apparatus; and
processing the service signal through the second service board, or transmitting the service signal to the another cluster device through the first port of the first cluster transfer board.

16. The service processing method according to claim 15, wherein the first switching signal connection apparatus comprises a first connection apparatus and a second connection apparatus; and
the transmitting the service signal to the second service board or the first cluster transfer board through the first switching signal connection apparatus comprises: transmitting the service signal to the second service board through the first connection apparatus, or transmitting the service signal to the first cluster transfer board through the first connection apparatus and the second connection apparatus.

17. The service processing method according to claim 15 or 16, wherein the first cluster transfer board comprises one of a second cluster transfer board and a third cluster transfer board, and the second cluster transfer board and the third cluster transfer board have different functions.

18. The service processing method according to claim 17, wherein
the transmitting the service signal to the another cluster device through the first port of the first cluster transfer board comprises: transmitting an optical signal of the service signal to the another cluster device through the first port of the second cluster transfer board; or
the transmitting the service signal to the another cluster device through the first port of the first cluster transfer board comprises: transmitting an electrical signal of the service signal to the another cluster device through the first port of the third cluster transfer board.
